(19)

Europäisches Patentamt
European Patent Office
Office européen des brevets

(11) **EP 3 140 358 B1**

(12) **EUROPEAN PATENT SPECIFICATION**

(45) Date of publication and mention
of the grant of the patent:
**23.09.2020 Bulletin 2020/39**

(51) Int Cl.:
***C09D 11/00*** *(2014.01)*   ***C09D 11/02*** *(2014.01)*

(21) Application number: **15721805.8**

(22) Date of filing: **06.05.2015**

(86) International application number:
**PCT/GB2015/051318**

(87) International publication number:
**WO 2015/170085 (12.11.2015 Gazette 2015/45)**

(54) **INK COMPOSITIONS**

TINTENZUSAMMENSETZUNG

COMPOSITIONS D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2014 GB 201407981**

(43) Date of publication of application:
**15.03.2017 Bulletin 2017/11**

(73) Proprietor: **IMERTECH SAS**
**75015 Paris (FR)**

(72) Inventors:
• **LEGRIX, Anabelle Huguette Renee**
**St. Austell**
**Cornwall PL26 7QL (GB)**

• **FOOKS, James Alfred**
**St. Austell**
**Cornwall PL25 5RY (GB)**
• **COE, Alexander James**
**Falmouth**
**Cornwall TR11 3RR (GB)**

(74) Representative: **Haseltine Lake Kempner LLP**
**Redcliff Quay**
**120 Redcliff Street**
**Bristol BS1 6HU (GB)**

(56) References cited:
**EP-A1- 1 314 766       WO-A1-2013/181021**
**GB-A- 960 639         JP-A- 2012 172 023**
**US-A1- 2005 098 505**

EP 3 140 358 B1

## Description

### Field of the Disclosure

The present disclosure relates generally to ink compositions, methods of making said compositions and uses thereof. In particular, but not exclusively, the present disclosure relates to offset ink compositions, their manufacture and uses thereof. The present disclosure also relates to inorganic particulate additives, for example inorganic particulate minerals and the use of said particulate additives as ink additives.

### Background of the Disclosure

Offset printing is an indirect lithographic process and is currently the major printing technology used in industry.
The printing plate used in offset printing comprises printing and non-printing areas. The printing areas of the plate are generally oleophilic (oil-accepting) and hydrophobic (water-repelling). The non-printing areas of the plate are generally oleophobic (oil-repelling) and hydrophilic (water-accepting). An oil-based ink therefore can be held on the printing areas of the printing plate, and not the non-printing areas.
During the printing process, a dampening system covers the non-printing areas of the offset printing plate with a thin film of a water-based dampening solution, also known as fountain or fount solution. An inking system covers the printing areas of the printing plate with ink. The ink is subsequently transferred from the printing plate onto a flexible intermediate carrier known as a blanket, and then onto a substrate to be printed.
The ink used in offset printing is usually a viscous mixture and usually comprises an ink pigment, a liquid carrier and optional other additives. Ink pigments determine the hue of the printing ink and can be organic or inorganic in nature. Carrier substances and other additives together form the bulk of the ink and control its viscosity. The carrier substances are removed during the drying process of the ink, for example by evaporation or absorption. A typical carrier comprises an oil carrier, typically comprising one or more mineral oil.
Additives may include ink binders. Ink binders aid the binding of the pigment to the substrate and also protect pigment particles from mechanical abrasion. Examples of suitable ink binders are varnishes. Inks may also contain further additives in order to provide particular properties and to overcome particular printing problems, as is well known in the art.
Such a further additive can be one or more extenders. Extenders in ink may reduce the cost of pigments and reduce colour strength. Extenders can be present as a component of tints, to maintain correct pigment loading. Some extenders may also impart particular desired ink properties, for example luminescent or pearlescent effects.
It is known to use inorganic particulate minerals, such as kaolin (for example hydrous kaolin), calcium carbonate (for example, precipitated calcium carbonate (pcc) or ground calcium carbonate (gcc)), talc or mixtures thereof, as additives in offset printing ink. Kaolin, for example, is used in inks to improve ink holdout, as a pigment, as a pigment extender to extend both coloured and white pigments, and to provide thixotropy. Kaolin (also known as china clay) contains predominantly mineral kaolinite ($Al_2Si_2O_5(OH)_4$), a hydrous aluminium silicate, together with small concentrations of other minerals. The term kaolin covers the minerals kaolinite, dickite, nacrite and halloysite.
One problem associated with using inorganic particulate additives in offset printing inks is that the particulate additive can bleed from the ink into the fount solution. This can result in undesirable marks being made on the printed substrate.
It is therefore desirable to provide ink compositions containing one or more inorganic particulate additives, wherein bleeding of the inorganic particulate additive or additives from the ink into the fount solution is prevented or reduced in comparison with a conventional ink composition containing similar inorganic particulate additives, or in comparison with a corresponding ink composition containing similar inorganic particulate additives which have not been modified or selected in the manner of the present disclosure. Further, it may be desirable to provide at least an alternative ink composition for use in printing, in particular for use in offset printing.
WO 2013/181021 relates to a surface-modified hydrophobic clay composition for an ink formulation comprising up to 99 wt% clay particles and from about 1 wt% to about 10 wt% of one or more organic compounds selected from quaternary ammonium compounds, organic acids, fatty acids, organic silanes, or organic polysilanes.
JP 2012 172023 relates to a method for producing a kaolin pigment dispersion for oil printing comprising a step of mixing, with an aqueous mixture of a kaolin pigment, at least one surface-treating agent selected from the group consisting of an aliphatic amine, an aliphatic amine salt and a silane coupling agent having an amino group, the amount of surface-treating agent being 0.5-10.0 pts.mass based on 100 pts.mass kaolin pigment, and then agitating at 20-100°C to subject the kaolin pigment to surface treatment; and a step of adding, after the surface treatment an oil printing varnish to the obtained aqueous mixture, to perform flushing, and then removing the water.
GB 960639 relates to particles having an ion-exchange capacity coated to produce pigments and fillers for the paint and ink industries by adding to an aqueous slurry of the particles a soluble compound containing a component to be applied as a coating, mixing to absorb said component on to the exchange sites and then adding to the slurry a precipitant for the component absorbed on the exchange sites to form a precipitated coating.

US 2005/098505 relates to a filter aid and a method using the same that remove contaminants from water-based metal forming liquids used in aluminium forming, rolling and other metal working processes. The filter aid includes a cellulosic material and a cationic polymer flocculating agent that is mixed with contaminated metal working fluid for a predetermined amount of time.

EP 1314766 relates to a re-dispersible pigmented printing ink composition obtained by the addition of a flocculating agent to the pigment dispersion in the printing liquid.

## Brief Description of the Disclosure

The invention is defined in and by the appended claims. The present disclosure is based on the surprising finding that particular inorganic particulate additives can advantageously be used in ink compositions. In one aspect, the particulate additives may have a surface hydrophobicity which is within an advantageous range for the particular liquid carrier and other ink components used in order to reduce or eliminate bleeding of the particulate additive into the fount. The surface hydrophobicity may, for example, be obtained by providing the particulate additive with a hydrophobic coating, for example a hydrophobic coating which is chemically (e.g. covalently) bonded to the particulate additive. In another aspect, the particulate additives may be hydrophilic and the presence of another component, for example a flocculant, may be sufficient to reduce or eliminate bleeding of the particulate additive into the fount.

In a first aspect, the present disclosure provides an ink composition comprising a liquid carrier and an inorganic particulate additive which is present in particulate form in the ink, wherein the inorganic particulate additive has a washout factor of less than about 0.70. The expression "washout factor" means the property of the inorganic particulate additive to be retained in a typical printing ink so that, on contact with an aqueous fount solution, the turbidity of the fount solution is less than about 0.70 on the logarithmic scale of absorbance of light at wavelength 460nm, using as reference the fount solution that has not been contacted with the ink (turbidity of 0 representing 0% light absorbance and turbidity of 1 representing 10% light absorbance). The washout factor is preferably measured in accordance with the washout test method described herein. The washout factor may, for example, be equal to or less than about 0.60. For example, the washout factor may be equal to or less than about 0.50.

In certain embodiments of the first aspect of the present disclosure, the inorganic particulate additive may comprise an inorganic particulate mineral. For example, the inorganic particulate mineral may comprise a clay, for example kaolin. Said ink compositions may further comprise a flocculant, for example salts comprising multivalent cations such as, for example, aluminium sulphate (alum); ionene polymers such as, for example, cationic polymers of 1,2-ethanediamine with (chloromethyl)oxirane and N-methylmethanamine, or combinations thereof. Alternatively or additionally, said inorganic particulate material may, for example, be provided with a hydrophobic coating, for example a coating comprising an organic silane or an organic amine. A flocculant is typically used when a hydrophobic coating is not present. Such inks are novel and patentable *per se.*

Thus, in a second aspect of the present disclosure there is provided an ink composition comprising a liquid carrier, a particulate inorganic additive, for example a particulate clay additive, and a flocculant.

In a third aspect of the present disclosure there is provided an ink composition comprising a liquid carrier and a particulate clay additive, wherein particles of the particulate clay additive are provided with a coating comprising an organic silane or an amine.

In a fourth aspect, the present disclosure provides a use of an ink composition of any one of the first, second or third aspects of the present disclosure, or any embodiments thereof, in offset printing.

In a fifth aspect, the present disclosure provides a use of a flocculant as a component of an ink composition to reduce or eliminate bleeding of an inorganic particulate additive from the ink composition into a fount solution during offset printing.

In a sixth aspect, the present disclosure provides a method of manufacturing an ink composition in accordance with the present disclosure comprising combining the liquid carrier, the inorganic particulate additive, and optionally the flocculant.

The ink compositions described herein are preferably for use in, or used in, offset litho printing. Thus, the ink compositions described herein may suitably be identified as offset printing ink compositions.

The hydrophobic coated inorganic particulate additives disclosed herein may, for example, be used to reduce or eliminate bleeding of the inorganic particulate additive from the ink composition into the fount solution during offset printing. The hydrophobic coated inorganic particulate additives may reduce or eliminate bleeding of the inorganic particulate additive from the ink composition into the fount solution during offset printing in comparison to a corresponding inorganic particulate additive which does not have a hydrophobic coating. The hydrophobic coated inorganic particulate additive may, for example, be a clay, for example kaolin, which has been coated with an organic silane such as vinyl silane or octyl silane. The coating may suitably be covalently bonded to the clay.

The flocculants disclosed herein may, for example, be used to reduce or eliminate bleeding of an inorganic particulate additive from the ink composition into the fount solution during offset printing. The inorganic particulate additive may be treated with the flocculant (e.g. to form a flocculated inorganic particulate additive, e.g. a flocculated clay) before it is added to the offset printing ink. The flocculant may, for example, reduce or eliminate bleeding of the inorganic particulate additive from the ink composition into the fount solution during offset printing in comparison to a corresponding inorganic particulate additive which has not been treated with a flocculant or in comparison to an inorganic particulate additive present in an ink composition which does not comprise a flocculant.

In certain embodiments of any aspect of the present disclosure, the inorganic particulate additive may have a washout factor equal to or less than about 0.60. For example, the inorganic particulate additive may have a washout factor equal to or less than about 0.50.

In certain embodiments of any aspect of the present disclosure, the inorganic particulate additive may comprise, consist essentially of or consist of an inorganic particulate mineral. For example, the inorganic particulate mineral may comprise, consist essentially of, or consist of a clay (for example kaolin), calcium carbonate, talc or combinations thereof.

In certain embodiments of any aspect of the present disclosure, at least about 70% of the particles of the inorganic particulate additive are smaller than about 2 $\mu$m. In certain embodiments of any aspect of the present disclosure, the inorganic particulate additive has a $d_{50}$ equal to or less than about 1.2 $\mu$m.

As mentioned above, in certain embodiments of any aspect of the present disclosure, the ink composition further comprises a flocculant. The washout factor of the inorganic particulate additive may, for example, refer to the washout factor of the inorganic particulate additive in combination with the flocculant. The inorganic particulate additive may be treated with the flocculant before being incorporated into the ink composition. For example, the inorganic particulate additive and flocculant may be added to the ink composition in the form of a flocculated inorganic particulate additive. The inorganic particulate additive and flocculant may, for example, be in the form of dry particles containing the inorganic particulate additive and the flocculant.

In certain embodiments of any aspect of the present disclosure, the flocculant may be present in the ink composition in an amount of at least about 0.05 % by weight of the inorganic particulate additive. For example, the flocculant may be present in the ink composition in an amount of from about 0.05 % to about 1.0 % by weight of the inorganic particulate additive. For example, the flocculant may be present in the ink composition in an amount of from about 0.1 % to about 0.5 % by weight of the inorganic particulate additive.

In certain embodiments of any aspect of the present disclosure, the flocculant may comprise a multivalent cation. The flocculant may, for example, comprise, consist essentially of or consist of aluminium sulphate (alum).

In certain embodiments of any aspect of the present disclosure, the flocculant may comprise a polymer. The polymer may, for example, be a cationic polymer. Ionene polymers may be mentioned as suitable flocculants. The flocculant may, for example, comprise, consist essentially of or consist of cationic polymers of 1,2-ethanediamine with (chloromethyl)oxirane and N-methylmethanamine.

In certain embodiments of any aspect of the present disclosure, the inorganic particulate additive may comprise particles that are provided with a hydrophobic coating. The inorganic particulate additive may be provided with the hydrophobic coating before being combined with the carrier and optional flocculant to form the ink composition.

In certain embodiments of any aspect of the present disclosure, the inorganic particulate additive may be provided with a hydrophobic coating which is chemically (e.g. covalently) bonded to the inorganic particulate additive. For example, the inorganic particulate additive may be clay, for example kaolin, and the hydrophobic coating may comprise a silane, for example an organic silane. For example, the inorganic particulate additive may be clay, for example kaolin, and the hydrophobic coating may comprise an organic amine, for example an alkyl amine.

In certain embodiments of any aspect of the present disclosure, the hydrophobic coating may, for example, comprise, consist essentially of or consist of one or more silane(s). The one or more silane(s) may comprise, consist essentially of or consist of an organic silane. The organic silane may, for example, be an alkyl silane, which may, for example, comprise at least one organic group having between one and ten carbon atoms, for example between two and eight carbon atoms. The one or more silane(s) may for example, comprise, consist essentially of or consist of octyl silane, vinyl silane, or combinations thereof.

In certain embodiments of any aspect of the present disclosure, the hydrophobic coating may, for example, comprise, consist essentially of or consist of an amine. The amine may, for example, comprise at least one organic group having at least ten carbon atoms. For example, the amine may comprise, consist essentially of or consist of octadecylamine.

In certain embodiments of any aspect of the present disclosure, the hydrophobic coating may, for example, comprise, consist essentially of or consist of a fatty acid or salt thereof. The fatty acid may, for example, comprise, consist essentially of or consist of stearic acid or stearate.

In certain embodiments of any aspect of the present disclosure, the inorganic particulate additive is not provided with a hydrophobic coating. For example, the particulate material or additive may be used in as-manufactured state without any surface treatment. Surface treatment of particulate materials or additives for use in the present disclosure typically comprises a hydrophobising treatment to increase the hydrophobicity of a relatively hydrophilic particulate material. An example of a suitable untreated particulate additive is untreated talc, however, which has a relatively hydrophobic natural surface which can be compliant with features of the present disclosure in the as-manufactured state without any surface hydrophobising treatment. A further example of a suitable untreated particulate additive is an inorganic particulate additive which has been treated with a flocculant before being formed into dry particles as described above.

The ink compositions disclosed in relation to any aspect of the present disclosure may further comprise an ink pigment. In particular, the ink composition may further comprise an ink pigment when the particulate additive does not itself serve as a pigment. The ink pigment may suitably comprise a particulate inorganic or organic material which may, for example, be present in particulate form in the ink.

The ink compositions of the present disclosure may provide at least one of the following advantages. For example, the ink compositions of the present disclosure may reduce or eliminate bleeding of the inorganic particulate material or additive into the fount solution. The use of the ink compositions of the present disclosure in printing may also provide improved print quality, and improved ink rheology.

The details, examples and preferences provided in relation to any particular one or more of the stated aspects of the present disclosure, apply equally to all aspects of the present disclosure. Any combination of the embodiments, examples and preferences described herein in all possible variations thereof is encompassed by the present disclosure unless otherwise indicated herein, or otherwise clearly contradicted by context.

## Detailed Description of the Disclosure

### Ink composition

The ink compositions of the present disclosure comprise, or alternatively may consist of, or alternatively may consist essentially of, a liquid carrier (also referred to herein as an ink carrier or liquid ink carrier) and the inorganic particulate additive. Said inorganic particulate additive may, for example, be an inorganic particulate mineral. The ink compositions of the present disclosure may optionally further comprise one or more co-agents, for example the coatings or flocculants, to reduce the washout factor into the range of less than about 0.70 where the untreated particulate mineral additive has an unacceptably high washout factor.

### *Particulate Mineral Additives*

Suitable particulate mineral additives for use in the present disclosure may be selected from one or more of the following: zinc oxide (for example, zinc white or Chinese white), titanium dioxide (for example, anatase or rutile), zinc sulphide, calcium carbonate (for example precipitated calcium carbonate (PCC) or ground calcium carbonate (GCC), whiting), barium sulphate (for example, blanc fixe or process white), alumina hydrate (for example, light alumina hydrate, lake white or transparent white), talc (for example, French chalk), silica, clay (for example kaolin or China clay or bentonite). The particulate mineral additive may be selected from one or more of the minerals listed. The particulate mineral additive may comprise a blend of any combination of the listed minerals.

When the particulate mineral additive of the present disclosure is obtained from naturally occurring sources, it may be that some mineral impurities will inevitably contaminate the ground material. For example, naturally occurring calcium carbonate occurs in association with other minerals. In general, however, the particulate mineral additive used in the disclosure will contain less than 5% by weight, preferably less than 1% by weight of other mineral impurities.

Clay additives are particularly suitable for use in connection with the present disclosure. The clay may suitably be a primary clay or secondary clay. For example, the clay may be a primary clay. Examples of suitable clays are kaolin (e.g. hydrous kaolin), bentonite, montmorillonite and synthetic layered silicates such as laponites, hectorites. Hereinafter, embodiments of the present disclosure may tend to be discussed in terms of clays such as kaolin. However, the disclosure should not be construed to be limited to such embodiments.

The particulate calcium carbonate used in the present disclosure may be obtained from a natural source by grinding or may be prepared synthetically by precipitation (PCC), or may be a combination of the two, i.e. a mixture of the naturally derived ground material and the synthetic precipitated material. The PCC may also be ground.

Ground calcium carbonate (GCC) is typically obtained by grinding a mineral source such as chalk, marble or limestone, which may be followed by a particle size classification step, in order to obtain a product having the desired degree of fineness. The particulate solid material may be ground autogenously, i.e. by attrition between the particles of the solid material themselves, or alternatively, in the presence of a particulate grinding medium comprising particles of a different material from the calcium carbonate to be ground.

Wet grinding of calcium carbonate involves the formation of an aqueous suspension of the calcium carbonate which may then be ground, optionally in the presence of a suitable dispersing agent. Reference may be made to, for example, EP-A-614948 for more information regarding the wet grinding of calcium carbonate.

PCC may be used as the source of particulate calcium carbonate in the present disclosure, and may be produced by any of the known methods available in the art. TAPPI Monograph Series No 30, "Paper Coating Pigments", pages 34-35 describes the three main commercial processes for preparing precipitated calcium carbonate which is suitable for use in preparing products for use in the paper industry, but may also be used in connection with the present disclosure. In all three processes, limestone is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process, the milk of lime is contacted with soda ash to produce, by double decomposition, a precipitate of calcium carbonate and a solution of sodium hydroxide. The sodium hydroxide must be substantially completely separated from the calcium carbonate if this process is to be commercially attractive. In the third main commercial process, the milk of lime is first contacted with ammonium chloride to give a calcium chloride solution and ammonia gas. The calcium chloride solution is then contacted with soda ash to produce, by double decomposition, precipitated calcium carbonate and a solution of sodium chloride.

The process for making PCC results in very pure calcium carbonate crystals and water. The crystals can be produced in a variety of different shapes and sizes, depending on the specific reaction process that is used. The three main forms of PCC crystals are aragonite, rhombohedral and scalenohedral, all of which are suitable for use in the present disclosure, including mixtures thereof.

The inorganic particulate additive may comprise, consist of, or consist essentially of kaolin. The term kaolin covers the minerals kaolinite, dickite, nacrite and halloysite. The kaolin may be a platy kaolin or a hyper-platy kaolin. By 'platy' kaolin is meant kaolin having a high shape factor. A platy kaolin has a shape factor from about 20 to less than about 60. A hyper-platy kaolin has a shape factor from about 60 to 100 or greater than 100. "Shape factor", as used herein, is a measure of the ratio of particle diameter to particle thickness for a population of particles of varying size and shape as measured using the electrical conductivity methods, apparatuses, and equations described in U.S. Patent No. 5,576,617. As described in the '617 patent, the electrical conductivity of a composition of an aqueous suspension of oriented particles under test is measured as the composition flows through a vessel. Measurements of the electrical conductivity are taken along one direction of the vessel and along another direction of the vessel transverse to the first direction. Using the difference between the two conductivity measurements, the shape factor of the particulate material under test is determined.

Kaolin clay for use in certain embodiments of the present disclosure may be a processed material derived from a natural source, namely raw natural kaolin clay mineral. The processed kaolin clay may typically contain at least about 50% by weight kaolinite. For example, most commercially processed kaolin clays contain greater than about 75% by weight kaolinite and may contain greater than about 90% by weight, in some cases greater than about 95% by weight of kaolinite.

Kaolin clay used in certain embodiments of the present disclosure may be prepared from the raw natural kaolin clay mineral by one or more other processes which are well known to those skilled in the art, for example by known refining or beneficiation steps. For example, the clay mineral may be bleached with a reductive bleaching agent, such as sodium hydrosulfite. If sodium hydrosulfite is used, the bleached clay mineral may optionally be dewatered, and optionally washed and again optionally dewatered, after the sodium hydrosulfite bleaching step. The clay mineral may be treated to remove impurities, e. g. by flocculation, flotation, or magnetic separation techniques well known in the art.

The process for preparing the particulate kaolin clay for use in certain embodiments of the present disclosure may also include one or more comminution steps, e.g., grinding or milling. Light comminution of a coarse kaolin is used to give suitable delamination thereof. The comminution may be carried out by use of beads or granules of a plastic (e. g. nylon), sand or ceramic grinding or milling aid. The coarse kaolin may be refined to remove impurities and improve physical properties using well known procedures. The kaolin clay may be treated by a known particle size classification procedure, e.g., screening and centrifuging (or both), to obtain particles having a desired $d_{50}$ value or particle size distribution. An example of a kaolin suitable for use in embodiments of the present disclosure is a kaolin (commercially available from Imerys Minerals UK Limited) wherein the mass percent finer than $2\mu m$ is at least about 70% as measured by Sedigraph.

Other suitable coated particulate mineral additives include calcined kaolin and talc. The particles of calcined kaolin and/or talc may be provided with a hydrophobic coating as described herein. The calcined kaolin may, for example, be treated with a silane (e.g. an organo silane) or propylene glycol, while talc may be treated with a silane (e.g. an organo silane).

The particulate mineral additive may be dried prior to inclusion in the ink composition. The particulate mineral additive may be dried to an extent such that the additive has and maintains an adsorbed water (or moisture) content not greater than about 0.5wt%, for example and particularly advantageously, not greater than about 0.1wt% based on the dry weight of the additive. This includes both uncoated and coated particulate additives and those which may have been treated with a flocculant.

Desirably, the particulate mineral additive, including when either coated or uncoated, is not susceptible to further substantial moisture pick-up. The particulate mineral additive may, for example, have a moisture level not greater than about 0.5wt%, for example not greater than about 0.1wt% after exposure to an atmosphere of 80% or more relative humidity for 40 hours at a temperature of 20°C.

The particulate mineral additive may optionally be free or substantially free of hygroscopic or hydrophilic compounds. For example, during grinding, the grinding may be carried out in the absence of added hygroscopic or hydrophilic compounds, or if wet ground, any dispersant employed may be minimised and/or subsequently removed from the additive in a known manner. For example, not greater than about 0.1 wt%, for example not greater than about 0.05wt% of a hydrophilic component may be present on the particulate additive based on the dry weight of the particulate additive. For example, not greater than about 0.1 wt%, for example not greater than about 0.05wt% of a dispersant, for example, a hydrophilic dispersant, may be present on/associated with the inorganic particulate additive based on the dry weight of the particulate filler. An example of such a dispersant is sodium polyacrylate. The moisture level may be measured in a known manner, e.g. by a Karl Fischer (KF) titration apparatus. In this method, the water may be driven off from the sample by heating and then measured using the quantitative reaction of water with iodine. In coulometric KF titration, the sample is added to a pyridine-methanol solution (with iodine and sulphur dioxide as principal components). The iodine generated electrolytically at the anode, reacts with water. The amount of water can be directly determined from the quantity of electric charge required for electrolysis.

The inorganic particulate additive may be present in the ink composition in an amount up to about 40 % by weight of the ink composition. For example, the inorganic particulate additive may be present in the ink composition in an amount up to about 30 %, for example up to about 20 % by weight of the ink composition. For example, the inorganic particulate additive may be present in the ink composition in an amount ranging from about 2 % to about 20 %, for example from about 5 % to about 20 %, for example from about 5 % to about 15 % by weight of the ink composition.

*Particle Size Distribution*

Unless otherwise stated, particle size properties referred to herein for the particulate fillers or materials are as measured in a well known manner by sedimentation of the particulate filler or material in a fully dispersed condition in an aqueous medium using a Sedigraph 5100 machine as supplied by Micromeritics Instruments Corporation, Norcross, Georgia, USA (telephone: +17706623620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value.

The inorganic particulate additive may have a particle size distribution such that at least about 70% of particles are smaller than about 2 $\mu$m. For example, the inorganic particulate additive may have a particle size distribution such that at least about 75% of particles are smaller than about 2 $\mu$m. For example, the inorganic particulate additive may have a particle size distribution such that at least about 80%, for example at least about 85% of particles are smaller than about 2 $\mu$m.

The inorganic particulate additive may, for example, have a particle size distribution such that between about 70 wt% and about 99 wt% of the particles of the inorganic particulate additive may be smaller than about 2 $\mu$m. For example, the inorganic particulate additive may, for example, have a particle size distribution such that between about 75% and about 99% of the particles of the inorganic particulate additive may be smaller than about 2 $\mu$m. For example, between about 75% and about 98%, for example between about 80% and about 98%, for example between about 85% and about 98% of particles of the inorganic particulate additive may be smaller than about 2 $\mu$m. The inorganic particulate additive may, for example, have a particle size distribution such that between about 75% and about 96%, for example between about 77% and about 96%, for example between about 80% and about 96%, for example between about 85% and about 96% of the particles of the inorganic particulate additive may be smaller than about 2 $\mu$m. The inorganic particulate additive may, for example, have a particle size distribution such that between about 75% and about 90%, for example between about 77% and about 90%, for example between about 80% and about 90% of the particles are smaller than about 2 $\mu$m.

The inorganic particulate additive may, for example, have a $d_{50}$ equal to or less than about 1.2 $\mu$m. For example, the inorganic particulate additive may have a $d_{50}$ equal to or less than about 1.0 $\mu$m, for example equal to or less than about 0.8 $\mu$m, for example equal to or less than about 0.6 $\mu$m. The inorganic particulate additive may, for example, have a $d_{50}$ in the range of about 0.2 $\mu$m to about 1.2 $\mu$m. For example, the inorganic particulate additive may have a $d_{50}$ in the range of about 0.2 $\mu$m to about 1.0 $\mu$m, for example about 0.2 $\mu$m to about 0.8 $\mu$m, for example from about 0.2 $\mu$m to about 0.6 $\mu$m. The inorganic particulate additive may, for example, have a $d_{50}$ in the range of about 0.3 $\mu$m to about 1.2 $\mu$m. For example, the inorganic particulate additive may have a $d_{50}$ in the range of about 0.3 $\mu$m to about 1.0 $\mu$m, for example about 0.3 $\mu$m to about 0.8 $\mu$m, for example from about 0.3 $\mu$m to about 0.6 $\mu$m. The inorganic particulate additive, may, for example have a $d_{50}$ in the range of about 0.5 $\mu$m to about 1.2 $\mu$m. For example, the inorganic particulate additive may have a $d_{50}$ in the range of about 0.5 $\mu$m to about 1.0 $\mu$m, for example about 0.5 $\mu$m to about 0.8 $\mu$m.

Without wishing to be bound by theory, it is believed that the effect of the inorganic particulate additive, when in the presence of a flocculant, to reduce or prevent bleeding of an ink into the fount solution is related to the effect of the flocculant to cause aggregation of the particles of the inorganic particulate additive, in particular aggregation of the fines of the inorganic particular additive. It has been observed that the proportion of particles that are smaller than about 0.5 $\mu$m, for example smaller than about 0.25 $\mu$m, decreases after treatment with the flocculant. For example, the number of particles of inorganic particulate additive that are smaller than about 0.5 $\mu$m, for example smaller than about 0.25 $\mu$m, may decrease by between about 1% and about 25% (percentage points), for example between about 2% and about 20% (percentage points), for example between about 5% and about 15% (percentage points), after treatment with the flocculant. The decrease in number of particles that are smaller than about 2 $\mu$m may, for example, be less than the decrease in number of particles that are smaller than about 0.5 $\mu$m or 0.25 $\mu$m. For example, the number of particles that are smaller than about 2 $\mu$m may decrease by between about 1% and about 10% (percentage points), for example between about 1% and about 8% (percentage points), for example between about 1% and about 5% (percentage points).

*Washout Factor*

The inorganic particulate additive may have a washout factor of less than about 0.70. For example, the inorganic particulate additive may have a washout factor of less than about 0.60 or less than about 0.50. For example, the inorganic particulate additive may have a washout factor of less than about 0.40, for example less than about 0.30.

The washout factor may be measured by preparing a sample of the inorganic particulate additive in an ink carrier liquid and mixing this ink with an excess of a water-based fount solution. The turbidity of the fount solution may then be determined by measuring its absorbance of light at wavelength 460nm, for example using a Unicam UV/VIS spectrometer UV4. Further details of measurement of the washout factor are provided in the Examples below.

The expression "washout factor of the inorganic particulate additive" generally refers to the washout factor of the inorganic particulate additive when in association with any one or more co-agents, for example a coating or flocculant, that lowers the washout factor of the untreated inorganic particulate additive into the range of less than about 0.70.

*Water Contact Angle*

Where the inorganic particulate additive has been provided with a hydrophobic coating, the inorganic particulate additive may have a water contact angle equal to or greater than about 15°. For example, the inorganic particulate additive may have a water contact angle equal to or greater than about 18°, for example equal to or greater than about 20°, for example equal to or greater than about 25°. The inorganic particulate additive may have a water contact angle equal to or greater than about 30°, for example equal to or greater than about 35°, for example equal to or greater than about 40°.

The hydrophobic-coated inorganic particulate additive may, for example, have a water contact angle in the range of about 20° to about 60°, for example about 30° to about 60°, for example from about 40° to about 60°. For example, the hydrophobic-coated inorganic particulate additive may have a water contact angle in the range of about 20° to about 55°, for example from about 30° to about 55°, for example from about 40° to about 55°. For example, the hydrophobic-coated inorganic particulate additive may have a water contact angle in the range of about 20° to about 50°, for example from about 20° to about 30°.

The water contact angle may be measured by using a FIBRO DAT 1100 Dynamic Absorption and Contact Angle Tester kept in an air conditioned room at 23°C and 50% relative humidity, as described in the examples below. The inorganic particulate material may be provided with a hydrophobic coating, for example a silane coating before the water contact angle is determined. For example, the water contact angle may be measured according to the test method used in the Examples below.

*Particle Coatings for the Particulate Additive or other Material*

As mentioned above, the inorganic particulate additive may optionally be surface coated. For example, the inorganic particulate additive may be coated with a hydrophobising surface treatment agent. The hydrophobic coating may be organic or inorganic. The hydrophobic treatment generally seeks to increase the hydrophobicity of the surface of the particulate mineral additive within the suitable range of hydrophobicity for the present disclosure, which prevents the said particulate mineral additive from bleeding into the fount solution when used in ink.

The term "hydrophobic coating" used herein is to be understood broadly, and is not limited, for example, to uniform coatings or to coatings which cover the entire surface area of a particle. Particles in which discrete regions of the surface are modified with a hydrophobic coating will be understood as being coated within the terms of the present disclosure. The coating may suitably be present in an amount sufficient to increase the hydrophobicity of the particulate mineral additive and to reduce bleeding of the particulate mineral additive into the fount solution. The hydrophobic coating may consist of, consist essentially of, or comprise a silane, for example an organic silane, a long chain amine or fatty acid (e.g. stearic acid) or salt thereof, or any combination thereof.

The inorganic particulate additive may be provided with a hydrophobic coating that is chemically bonded to the inorganic particulate additive (e.g. covalently bonded to the inorganic particulate additive). Without wishing to be bound by theory, it is believed that hydrophobic coatings that are chemically bonded (e.g. covalently bonded) to the inorganic particulate additive may be particularly advantageous in that they reduce bleeding of the inorganic particulate additive from an ink composition into a fount composition in comparison to an inorganic particulate additive that is provided with a hydrophobic coating that is not chemically bonded to the additive, for example that may be physically bonded (e.g. electrostatic interactions). It is thought that the chemical bonding of the hydrophobic coating may prevent the hydrophobic coating from being dissociated with the inorganic particulate additive, in particular when it comes into contact with an aqueous fount solution.

For example, the inorganic particulate additive may be provided with a hydrophobic coating comprising a silane or an amine (e.g. an organic silane or an alkyl amine) that is chemically bonded (e.g. covalently bonded) to the inorganic particulate additive. For example, the inorganic particulate additive may be a clay (e.g. kaolin) and the hydrophobic coating may comprise a silane or an amine (e.g. an organic silane or an alkyl amine). For example, the inorganic particulate additive may be calcium carbonate and the hydrophobic coating may comprise stearic acid or a salt thereof.

The inorganic particulate additive may not be provided with a hydrophobic coating. For example, the inorganic particulate additive may comprise, consist essentially of, or consist of, uncoated talc. For example, the inorganic particulate additive may comprise, consist essentially of, or consist of, a clay, for example kaolin.

*Coating Levels*

The level of coating may be about 0.1 to about 10 wt% based on the total weight of the coated particulate mineral additive, for example between about 0.1 and about 3 wt%, for example between about 0.5 or 0.6 or 0.7 or 0.8 and about 2.0 wt%, e.g. about 1 wt%. To a certain extent, this may depend on the surface area of the particulate mineral additive but, typically, the coating level (in mg) of surface treatment agent per surface area (in $m^2$) of dry particulate mineral additive may lie in the range from about 0.1 mg $m^{-2}$ to about 5.0 mg $m^{-2}$, for example about 0.1 mg $m^{-2}$ to about 2.0 mg $m^{-2}$, for example about 0.1 mg $m^{-2}$ to about 1.5 mg $m^{-2}$. For example, the coating level (in mg) of surface treatment agent per surface area (in $m^2$) of dry particulate mineral additive may lie in the range from about 0.1 mg $m^{-2}$ to about 1.0 mg $m^{-2}$, for example from about 0.3 mg $m^{-2}$ to about 1.0 mg $m^{-2}$, for example from about 0.3 mg $m^{-2}$ to about 0.7 mg $m^{-2}$, for example about 0.5 mg $m^{-2}$.

*Silane Coatings*

The inorganic particulate additive may be coated with a silane, for example an organic silane. The term "organic silane" means any silane substituted with at least one group which contains at least 1 carbon atom.

The organic portion of the silane coating may suitably comprise (or more preferably may consist essentially of, or consist of) a straight or branched chain alkyl group. For example, the organic silane may be a mono-alkyl silane, a di-alkylsilane, a tri-alkyl silane or a tetra-alkayl silane. The organic silane may, for example, be a monoalkyl silane.

The alkyl silane may comprise at least one group having between one and twenty five carbon atoms, for example between one and twenty carbon atoms, for example between one and fifteen carbon atoms. For example, the organic silane may comprise a straight or branched chain alkyl group having at least 3 carbon atoms, for example between 8 and 24 carbon atoms, such as, for example, a $C_{13}$, $C_{14}$, $C_{15}$, $C_{16}$, $C_{17}$, $C_{18}$, $C_{19}$, $C_{20}$, $C_{21}$, $C_{22}$ or $C_{23}$ alkyl group. For example, the alkyl silane may comprise at least one group having between one and ten carbon atoms, for example between two and ten carbon atoms, for example between two and eight carbon atoms. Alternatively, the organic portion may comprise (or more preferably consist essentially of or consist of) one or more cyclic organic groups, which may be saturated, unsaturated or aromatic, and may optionally include one or more heteroatoms, for example selected from O, N, S and Si. The cyclic organic group may, for example, include at least one six-membered ring. The organic portion of the compound may include one or more substituent groups. Suitable functional substituent groups include, for example, polar or nonpolar groups.

Organic silanes may, for example, be selected from straight chain alkyl silanes, branched alkyl silanes, alkoxy (branched or straight chain) silanes and alkenyl silanes. Examples of straight chain alkyl silanes include ethyl silane, propyl silane, butyl silane, pentyl silane, hexyl silane, heptyl silane, octyl silane, nonyl silane and decyl silane. Examples of alkoxy silanes include trimethoxy silane and triethoxy silane. Examples of alkenyl silanes are vinyl silane, propenyl silane and butenyl silane. The organic silane may, for example, be vinyl silane or octyl silane.

*Long Chain Amine Coatings*

Amines may be used to coat the inorganic particulate additive. For example, primary, secondary or tertiary amines may be used to coat the particulate mineral additive. The amine may, for example, comprise, consist essentially of or consist of at least one organic group having at least 10 carbon atoms. The at least one organic group may, for example, contain up to about 30 carbon atoms. For example, the amine may comprise, consist essentially of, or consist of, at least one organic group having at least 12 carbon atoms, for example at least 15 carbon atoms, for example about 18 carbon atoms. The amine may, for example, comprise, consist essentially of, or consist, of two organic groups having at least 10 carbon atoms, for example at least 12 carbon atoms. For example, the amine may comprise, consist essentially of, or consist of, at least two organic groups having at least 15 carbon atoms, for example about 18 carbon atoms.

The amine may, for example, be a primary amine such as octadecylamine (pure or tallow amine Armeen HT) or a secondary amine such as (dioctadecylamine Armeen 2HT, Armeen M2HT). The amine may, for example, be a quaternary amine.

*Fatty acid or salts thereof*

The inorganic particulate additive particles may be coated with one or more fatty acids or salts thereof, for example one or more aliphatic carboxylic acids having at least 10 chain carbon atoms. For example, the additive particles may be coated with one or more fatty acids or salts or esters thereof. The fatty acids may be selected from stearic acid, palmitic acid, behenic acid, montanic acid, capric acid, lauric acid, myristic acid, isostearic acid and cerotic acid. The coated additive may therefore be stearate coated. The coated additive may be a stearate coated calcium carbonate or a stearate coated kaolin, for example a stearate coated hydrous kaolin. It has been found that stearate coated calcium carbonate is particularly effective, even more particularly stearate coated GCC.

The hydrophobic coating may comprise one or more of ammonium stearate, calcium stearate, magnesium stearate and sodium stearate.

*Flocculant*

The ink compositions disclosed herein may further comprise one or more flocculant(s). The flocculant may, for example, be used to treat the inorganic particulate additive before it is incorporated into the ink composition. For example, the inorganic particulate additive may undergo a wet flocculation treatment before incorporation into the ink composition. Thus, in the ink compositions disclosed herein, the inorganic particulate additive and flocculant may be in the form of an inorganic particulate additive which was treated with the flocculant (e.g. to form a flocculated inorganic particulate additive, e.g. a flocculated clay) before being incorporated into the ink. For example, the inorganic particulate additive and flocculant may be in the form of dry particles containing the inorganic particulate additive and the flocculant. For example, the inorganic particulate additive may be coated with the flocculant.

The flocculant may present in the ink composition in an amount of at least about 0.05 % by weight of the inorganic particulate additive. For example, the flocculant may be present in the ink composition in an amount of at least about 0.1 %, for example at least about 0.2 %, for example at least about 0.3 % by weight of the inorganic particulate additive.

The flocculant may, for example, be present in the ink composition in an amount ranging from about 0.05 % to about 1.0 % by weight of the inorganic particulate additive. For example, the flocculant may be present in the ink composition in an amount ranging from about 0.1 % to about 0.9, for example from about 0.1 % to about 0.8 %, for example from about 0.1 % to about 0.7 % by weight of the inorganic particulate additive. For example, the flocculant may be present in the ink composition in an amount ranging from about 0.1 % to about 0.5% by weight of the inorganic particulate additive. For example, the flocculant may be present in the ink composition in an amount of about 0.3 % by weight of the inorganic particulate additive.

The flocculant may suitably be any chemical that promotes flocculation (aggregation of) particles of the inorganic particulate additive. The flocculant may, for example, comprise a multivalent cation. The multivalent cation may, for example, be selected from one or more of aluminium, barium, calcium, copper, iron, magnesium, manganese, nickel, tin, titanium, zinc and the like.

The flocculant may be a salt. For example, the flocculant may be salt comprising one or more chloride ions, a chlorate ions, bromide ions, iodide ions, sulphate ions, nitrate ions, phosphate ions, cyanate ions, acetate ions, oxalate ions, lactate ions, fumarate ions, citrate ions and benzoate ions. For example, the flocculate may be a sulphate salt.

For example, the flocculant may comprise, consist essentially of or consist of potassium aluminium sulphate (e.g. hydrated potassium aluminium sulphate), aluminium sulphate (e.g. hydrated aluminium sulphate), aluminium chlorohydrate, calcium oxide, calcium hydroxide, iron (II) sulphate, iron (III) sulphate, sodium aluminate and combinations thereof. For example, the flocculant may comprise, consist essentially of or consist of aluminium sulphate.

The flocculant may, for example, comprise, consist essentially of or consist of a polymer. The polymer may comprise an anionic, cationic or non-ionic polymer. For example, the flocculant may comprise a cationic polymer. The cation may, for example, be selected from one or more of ammonium, quaternised ammonium, lithium, sodium, potassium, beryllium, magnesium, calcium, iron, titanium, chromium, manganese, magnesium, nickel, copper, zinc, aluminium or tin.

The polymer may, for example, be selected from polyethylene imine, hexamethylene tetramine, 1:12 dodecanediamine, ethylene diamine, polyethylene polyamines having the general formula $H_2N(C_2H_4NH)_nH$ (e.g. diethylene triamine, triethylene diamine, triethylene tetramine, tetraethylene pentamine, pentaethylene hexamine), polyacrylamide, modified polyacrylamides, polyethylene oxides, polydiallyldimethylammonium chloride (polyDADMAC), polyamines, and combinations thereof. For example, the flocculant may comprise, consist essentially of or consist of a polyamine, for example 1,2-ethanediamine polymer.

The polymeric flocculant may, for example, comprise, consist essentially of or consist of, at least one ionene polymer. Ionene polymers are cationic polymers in which a substantial proportion of the atoms providing the positive charge are quaternized nitrogens located in the main polymeric chain or backbone rather than in pendant groups. These polymers can be derived from the condensation polymerization of an organic dihalo alkyl compound and/or an epihalohydrin with one or more amines, amino compounds or ammonia.

The alkyl groups of the dihalo alkyl compound have from 1 to about 20 carbon atoms, and the halogen is selected from the group consisting of bromine, chlorine, and iodine. Suitable organic dihalo alkyl compounds include 1,2-dichloroethane, 1,3-dichloropropane, 1,4-dichlorobutane, 1,5-dichloropentane, 1-6-dichlorohexane, and 1,1'-oxy-bis(2-chloroethane). Suitable epihalohydrins include epichlorohydrin and epibromohydrin.

The alkyl groups of the amines or amino compounds have from 1 to about 20 carbon atoms. Suitable amines or amino compounds include dialkylamino trialkylamines, dialkylamino alkylamines, alkyldiamines, dialkylamines and ditertiary amines.

The ionene polymers used in this disclosure are commercially available or are easily synthesized from commercially available raw materials. The processes for making such polymers have been described in U.S. Pat. No. 2,261,002 to Ritter, U.S. Pat. No. 2,271,378 to Searle, U.S. Pat. No. 3,489,663 to Bayer et al., U.S. Pat. Reissue Nos. 28,807 and 28,808 to Panzer, U.S. Pat. No. 4,054,542 to Buckman et al., U.S. Pat. No. 4,506,081 to Fenyes et al. and U.S. Pat. No. 4,581,058 to Fenyes et al.

An example of a suitable cationic polymeric flocculant for use in the present disclosure is 1,2-ethanediamine, polymer with (chloromethyl)oxirane and N-methylmethanamine.

### Ink Carriers

Carrier substances for ink compositions may suitably be selected from mineral oils or vegetable oils as will be known to those skilled in the art. Mineral oils are typically mixtures of hydrocarbons and are particularly suitable for use in offset printing inks. Vegetable oils may comprise esters such as glycerol esters.

The liquid carrier may also suitably comprise an ink binder. Suitable ink binders may be selected from resins, varnishes and combinations thereof. Resins, such as rosin and lac, may be naturally derived. For example, rosin is derived from the distillation of turpentine obtained from the sap of pine trees and lac is secreted by the lac insect. Resins may also be synthetic. Suitable examples of synthetic resins are phenolic resins, polyethylene, polyvinyl acetate or polyvinyl alcohol. Suitable examples of varnishes are hydrocarbon varnishes.

The liquid carrier may be present in the ink composition in any suitable amount to obtain an ink composition having the desired rheology. The liquid carrier may be present in the ink composition in an amount ranging from about 10 % by weight of the ink composition to about 90% by weight of the ink composition. For example the liquid carrier may be present in the ink composition in an amount ranging from about 10 % by weight of the ink composition to about 70 % by weight of the ink composition, for example from about 30 % by weight of the ink composition to about 60 % by weight of the ink composition.

### Ink Pigments

Suitable ink pigments may be selected depending on the particular ink properties required such as hue and colour intensity. Suitable ink pigments may be synthetic or naturally occurring. Suitable ink pigments may be inorganic or organic in nature. Examples of inorganic ink pigments include titanium dioxide ($TiO_2$), Prussian blue ($Fe_7(CN)_{18}$), chrome yellow ($PbCrO_4$), cadmium red (CdSe) and Iron black ($Fe_3O_4$). Examples of organic ink pigments include azo pigments (e.g. lithol rubine), phthalocyanine pigments, quinacridone pigments and diaryl pyrrolopyrrole pigments.

### Other Optional Additives

Examples of further additives which may be present in the ink composition may be selected from one or more of the following: rheology modifiers; surfactants; drying accelerating agents such as sodium lauryl sulphate, N-N-diethyl-m-toluamide, cyclohexylpyrrolidinone and butyl carbitol; diluents; humectants such as ethylene glycol, propylene glycol, diethylene glycols, glycerine, dipropylene glycols, polyethylene glycols, polypropylene glycols, amides, ethers, carboxylic acids, esters, alcohols, organosulfides, organosulfoxides, sulfones, alcohol derivatives, carbitol, butyl carbitol, cellosolve, ether derivatives, amino alcohols, and ketones; and biocides such as benzoates, dorbates, and isothiazolones.

Uses of the ink compositions

The ink compositions disclosed herein may, for example, be particularly suitable for use or used in offset printing. However, the ink compositions disclosed herein may also be suitable for or used in other types of printing processes. The ink compositions disclosed herein, may, for example be particularly suitable for use or used in offset printing wherein the ink composition is oleophilic and hydrophobic and the fount solution is hydrophilic and oleophobic.

The ink compositions comprising a liquid carrier and an inorganic particulate additive and optionally a flocculant include not only the first, second and third aspects of the present disclosure, but also any of the embodiments disclosed herein, including any combination of these embodiments in all possible variations thereof.

Use of a flocculant

There is provided herein a use of a flocculant to reduce or eliminate bleeding of an inorganic particulate additive from an ink composition into a fount solution during offset printing.

The flocculant, inorganic particulate additive, ink compositions and fount solutions may be as described herein in relation to any aspect of the present disclosure, including all embodiments disclosed herein in all possible combinations or variations thereof.

The inorganic particulate additive may be treated with the flocculant before being incorporated into the ink composition, for example the inorganic particulate additive may be incorporated into the ink composition as a flocculated inorganic particulate additive, e.g. a flocculated clay. For example, the inorganic particulate additive may undergo a wet flocculation treatment before being incorporated into the ink composition. For example, the desired dose of flocculant (e.g. flocculant in liquid form) may be combined with a slurry of inorganic particulate additive (e.g. clay slurry). The slurry may, for example, be mixed at low speed to obtain a homogenous mixture. The inorganic particulate additive (e.g. clay) may, for example, be dried before being added to an ink composition. Alternatively, the flocculant may be combined with the ink composition after the inorganic particulate additive and liquid carrier have been incorporated into the ink composition.

The inorganic particulate additive may, for example, comprise, consist essentially of or consist of clay, for example kaolin. The flocculant may, for example, comprise one or more cations. For example, the flocculant may comprise, consist essentially of or consist of one or more cationic polymers.

Methods of Making the Inks

The ink compositions according to the present disclosure may be made by any suitable method, as will be apparent to those skilled in the art.

There is provided herein a method of manufacturing an ink composition disclosed herein which comprises combining the liquid carrier, the inorganic particulate additive and optionally the flocculant.

The liquid carrier, inorganic particulate additive and flocculant may be as described herein in relation to any aspect of the present disclosure, including all embodiments disclosed herein in all possible combinations or variations thereof.

The inorganic particulate additive may, for example, be provided with a surface coating of a hydrophobic material before being combined with the carrier and optional flocculant. The surface coating may, for example, be as disclosed above in relation to the ink compositions.

The inorganic particulate additive may, for example, be treated with a flocculant before being combined with the liquid carrier, for example the inorganic particulate additive may be added to the liquid carrier in the form of a flocculated inorganic particulate additive, e.g. a flocculated clay. For example, the inorganic particulate additive may undergo a wet flocculation treatment before being incorporated into the ink composition. For example, the desired dose of flocculant (e.g. flocculant in liquid form) may be combined with a slurry of inorganic particulate additive (e.g. clay slurry). The slurry may, for example, be mixed at low speed to obtain a homogenous mixture. The inorganic particulate additive (e.g. clay) may, for example, be dried before being added to an ink composition. For example, the inorganic particulate additive may undergo treatment with a flocculant according to the method used in the Examples below.

The foregoing broadly describes the present disclosure without limitation. Variations and modifications as will be readily apparent to those skilled in the art are intended to be within the scope of the present invention as defined in and by the appended claims.

## Examples

### EXAMPLE 1

A range of inorganic particulate additives suitable for use in ink compositions were prepared. These inorganic particulate additives were then compared by performing experiments to determine percentage water uptake and turbidity (washout factor) and water contact angle.

*Materials*

The following inorganic particulate additives were used:

**Kaolin A** - a kaolin of ultrafine particle size with a brightness of 87.5 $\pm$ 1.0 (ISO R457). This material has the following physical properties: Maximum mass% of particles of +300 mesh size 0.02%. Maximum mass% of particles of size +10 $\mu$m 0.2%. Minimum mass% of particles of size -1 $\mu$m 77%. pH 5.5. BET surface area 16 m$^2$/g. $d_{50}$ approximately 0.4 $\mu$m equivalent spherical diameter.

**Kaolin B** - a kaolin of ultrafine particle size with a brightness of 85.5 $\pm$ 1.0 (ISO R457). This material has the following physical properties: Maximum mass% of particles of +300 mesh size 0.02%. Maximum mass% of particles of size +10 $\mu$m 0.5%. Mass% of particles of size -2 $\mu$m 76-83%. pH 5.5. BET surface area 14 m$^2$/g. $d_{50}$ approximately 0.7 $\mu$m equivalent spherical diameter.

**Kaolin C** - a kaolin of ultrafine particle size with a brightness of about 70 (ISO R457). This material has the following physical properties: Mass% of particles of size -2 $\mu$m 90 %. BET surface area 15 m$^2$/g. $d_{50}$ approximately 0.5 $\mu$m equivalent spherical diameter.

**Kaolin DD** - a kaolin of ultrafine particle size with a brightness of about 86.5 (ISO 15 R457). This material has the following physical properties: Mass% of particles of size less than 1 $\mu$m is 94%. BET surface area is 19.5 m$^2$/g. $d_{50}$ is approximately 0.25 $\mu$m equivalent spherical diameter.

**Talc A** - a talc-chlorite. This material has the following physical properties: Mass% of particles of size -2 $\mu$m 45%. Surface area 8 m$^2$/g. $d_{50}$ approximately 2.1 $\mu$m. pH 9.

**Calcium carbonate A -** a stearate coated ultrafine calcium carbonate comprising about 1.5 wt% stearic acid. This material has the following physical properties: Mass% of particles of size -2 $\mu$m 95 %. Surface area about 13 m$^2$/g. $d_{50}$ approximately 0.6 $\mu$m.

**Calcium carbonate B** - a stearate coated ultrafine calcium carbonate comprising about 0.95 wt% stearic acid. This material has the following physical properties: Mass% of particles of size -2 $\mu$m 70 wt%. Surface area about 5 m$^2$/g. $d_{50}$ approximately 1.4 $\mu$m.

Where indicated, these inorganic particulate additives were coated before the samples of inorganic particulate additive in varnish were prepared as described below. The inorganic particulate additives were coated in the dry state by mixing the coating additive (e.g. silane or amine) with the dry inorganic particulate material at high shear. This was performed at 50°C.
Commercially available fount solutions Journal Fount T and Journal Fount BC, obtainable from FlintGroup UK, United Kingdom (www.flintgrp.com) and used as standard in the news print industry were used to determine percentage water uptake, clay washout, and turbidity (washout factor) as described below.

*Methods*

*Measurement of Water Contact Angle*

The water contact angle was measured using a FIBRO DAT 1100 Dynamic Absorption and Contact Angle Tester kept in an air-conditioned room at 23°C and 50% relative humidity.
The powder mineral additive was pressed into a compressed disc/tablet of density ca. 1.5 g/cm$^3$ and ca. 2 mm thickness using a hand-held press. The thin discs/tablets were fitted into the relevant bar into the instrument and deionised water was added to the surface of the disc as 10 $\mu$l drop. The change in contact angle of the water drop on the mineral surface was monitored with time and results after 1 second were recorded. More hydrophobic surfaces give a higher water contact angle.

*Preparation of Mineral in Non-Pigmented Inks*

The mineral additives were incorporated into non-pigmented inks by adding the mineral in either a coldset or heatset varnish.

The coldset varnish was prepared by mixing at 5:1 wt:wt ratio a coldset news-ink varnish which is a modified phenolic varnish with a hydrocarbon varnish, both supplied by FlintGroup UK, United Kingdom (www.flintgrp.com).

The heatset varnish was prepared by mixing at 4:1 wt:wt ratio a varnish based on modified phenolic rosin called Uroset 7150E, supplied by Lawter, Chicago, USA (www.lawter.com), and a petroleum distillate called Exxprint H77A, supplied by Exxon Mobil, Texas, USA (www.exxonmobil.com).

The particulate mineral additive was added into the varnish by either high shear mixing or bead milling.

For the high shear mixing method, the mineral was added at 25 wt% in the varnish by mixing at 3,000 rpm for 10 minutes in a DAC 150 Speedmixer, ensuring that the mineral additive was well dispersed.

For the bead milling method, the mineral was added at 45 wt% in the coldset varnish or 40 wt% in the heatset varnish using a Dispermat VMA-getzman GMBH-D-5158 with bead mill attachment. The mineral was initially mixed at 400 rpm until it was all incorporated into the varnish. Stainless steel beads of 2 mm diameter and 9 g/cm$^3$ density were added to the mineral-varnish mix so that the volume of beads was 80% of the volume of the mineral-varnish mix. The speed was increased to 4,000 rpm and the mixing time was 30 minutes, keeping the temperature of the mix around 75°C by using a water cooling jacket and the torque at approximately 400 W.m. The mineral-varnish mix was recovered after screening out the stainless steel beads. The samples in Tables 1, 2 and 3 were diluted to 25 wt% mineral. The 45 wt% mineral concentrate in coldset varnish was diluted to 25 wt% using the same coldset varnish for further testing. The 40 wt% mineral concentrate in heatset varnish was diluted to 25 wt% using Webvar 1100E let down varnish, available from Lawter, Chicago, USA (www.lawter.com). The samples in Table 4 were not diluted.

After mixing, the 25 wt% mineral in coldset or heatset varnish was left to cool and rest for 24 hours before testing for interaction with fount solution (water uptake and washout).

*Determination of Interaction with Fount Solution or Lithotronic Behaviour (Determination of Water Uptake and Washout Factor)*

The fount solutions Journal Fount T and Journal Fount BC were prepared at 2.5 wt% concentration in tap water before testing with inks.

Various methods can be used to study the interaction between the ink and the fount solution. For example, the Duke D-10 ink water emulsification tester may be used (see US Patent Number 4,403,867). The ink is mixed with an excess of fount solution at low shear (about 90 rpm) and the water uptake or pick-up is monitored with time and the excess fount solution can be visually examined for evidence of washout at the end of the test. A Lithotronic ink tester can also be used (see for example, www.novomatics.de/lithotronic-iii/ or http://www.fullbrooksvstems.co.uk/Novomatics/lithotronic.html). The ink is mixed with a limited amount of fount solution at high shear (about 1200 rpm).

In the present examples, the lithotronic behaviour of the non-pigmented ink containing the particulate mineral additive was tested by mixing 10 g of the non-pigmented ink with 15 g of fount solution and mixing at high shear (2,000 rpm) using a DAC 150 Speedmixer. On mixing, an ink-fount emulsion was formed and after 6 minutes, the water uptake was determined by either pouring and measuring the amount of excess fount solution or by weighing the amount of fount solution being incorporated into the inks after the excess fount solution had been removed. The percentage water uptake was calculated as the amount of fount solution taken by 100 g of ink. The excess fount solution was examined for evidence of turbidity or washout and the amount of washout was measured using a Unicam UV/vis spectrometer UV4. The turbid fount solution was mixed, then placed into a disposable PMMA cuvette of 10 mm path length and its turbidity measured as the absorbance at 460 nm wavelength. The absorbance A is defined by the expression:

$$A = \log(T) = \log(I_t/I_0)$$

Where T is the transmittance, $I_0$ is the intensity of the incident light beam and $I_t$ is the intensity of the transmitted light beam. An absorbance of 10 means that there is a 1% reduction in transmitted light. An absorption of 1 means a 10% reduction in transmitted light and an absorption of 0 means no reduction in transmitted light. A high absorbance value means a high mineral washout from the ink into the fount solution.

A number of samples of mineral in non-pigmented coldset ink compositions were prepared by high shear mixing and tested for % water uptake after 6 minutes, washout factor (absorbance of 460 nm light, which is related to turbidity) and water contact angle using Journal Fount T solution. The results are shown in Table 1.

**Table 1.**

| Sample | Mineral | Coating | % Coating | % Water Uptake after 6 minutes | Washout Factor (Absorbance at 460 nm) | Water Contact Angle |
|--------|---------|---------|-----------|-------------------------------|---------------------------------------|---------------------|
| A | Kaolin A | Octyl silane | 0.5 | 55 | 0.53 | 20 |
| B | Kaolin A | Octyl silane | 1 | 52 | 0 | 37 |
| C | Kaolin A | Vinyl silane | 1 | 65 | 0 | - |
| D | Kaolin A | Armeen HT | 1 | 55 | 0.27 | - |
| E | Kaolin A | None | - | 44 | 2.5 | <5 |
| F | Kaolin B | Vinyl silane | 0.75 | 48 | 0.48 | 36 |
| G | Kaolin B | None | - | 40 | 2.1 | <5 |
| H | Kaolin C | Octyl silane | 0.75 | 55 | 0.03 | - |
| I | Kaolin C | Vinyl silane | 0.75 | 53 | 0.05 | 36 |
| J | Kaolin C | None | - | 45 | 2.4 | <5 |
| K | Talc A | None | - | 44 | 0 | 40 |
| L | Calcium Carbonate A | See description | - | 63 | 0.3 | - |
| M | Calcium Carbonate B | See description | - | 78 | 0.2 | 137 |

A number of samples of mineral in non-pigmented coldset ink compositions were prepared by high shear mixing and tested for % water uptake after 6 minutes, washout factor (absorbance of 460 nm light, which is related to turbidity) and water contact angle using Journal Fount BC solution. The results are shown in Table 2.

Table 2.

| Sample | Mineral | Coating | % Coating | % Water Uptake after 6 minutes | Washout Factor (Absorbance at 460 nm) | Water Contact Angle |
|--------|---------|---------|-----------|-------------------------------|---------------------------------------|---------------------|
| N | Kaolin B | Octyl silane | 0.75 | 54 | 0 | 35 |
| O | Kaolin C | Vinyl silane | 0.75 | 48 | 0 | 36 |
| P | Kaolin C | None | - | 42 | 3.0 | - |
| Q | Kaolin A | None | - | 42 | 3.2 | <5 |

A number of samples of mineral in non-pigmented heatset ink compositions were prepared by the bead milling method and tested for % water uptake after 6 minutes, washout factor (absorbance of 460 nm light, which is related to turbidity) and water contact angle using Journal Fount T solution. The results are shown in Table 3.

Table 3.

| Sample | Mineral | Coating | % Coating | % Water Uptake after 6 minutes | Washout Factor (Absorbance at 460 nm) | Water Contact Angle |
|---|---|---|---|---|---|---|
| R | Kaolin B | Octyl silane | 0.75 | 61 | 0.01 | 35 |
| S | Kaolin B | Vinyl silane | 0.75 | 61 | 0.03 | 36 |
| T | Kaolin C | Octyl silane | 0.75 | 57 | 0.01 | - |
| U | Kaolin C | Vinyl silane | 0.75 | 57 | 0.02 | - |
| V | Kaolin B | None | - | 48 | 0.94 | <5 |

The samples shown in Table 3 were mixed with bead milled magenta pigment to make a pigmented ink which was then used for printing using a Prufbau printer. It was found that the printing or drying properties of the ink were normal.

A number of samples of mineral in non-pigmented heatset ink compositions were prepared by the bead milling method and tested for % water uptake after 15 minute and washout factor (absorbance of 460 nm light, which is related to turbidity) using Journal Fount T solution. The results are shown in Table 4.

Table 4.

| Sample | Mineral | Coating | % Coating | % Water Uptake after 6 minutes | Washout Factor (Absorbance at 460 nm) |
|---|---|---|---|---|---|
| W | Kaolin B | Octyl silane | 1 | 47 | 0 |
| X | Kaolin B | Octyl silane | 0.75 | 46 | 0.03 |
| Y | Kaolin B | None | - | 33 | 0.51 |
| Z | Kaolin DD | Octyl silane | 1.25 | 42 | 0.01 |
| ZZ | Kaolin DD | None | - | 32 | 2.6 |

The samples shown in Table 4 were mixed with magenta concentrate to make pigmented inks containing 15 wt% magenta and 10 wt% kaolin. The pigmented inks were used for printing using a Prufbau printer. It was found that the printing or drying properties of the ink were normal.

## EXAMPLE 2

A number of samples comprising inorganic particulate clays and ink pigments were prepared. The percentage water uptake and turbidity (washout factor) of these samples were determined as described below.

*Materials*

The following inorganic particulate clays were used:

**Kaolin D** - a kaolin of ultrafine particle size with a brightness of 85.5 $\pm$ 1.0 (ISO R457). This material has the following physical properties: Maximum mass% of particles of +300 mesh size 0.02%. Maximum mass% of particles of size +10$\mu$m 0.5%. Mass% of particles of size -2 $\mu$m 76-83%. pH 5.5. BET surface area 14 m$^2$/g. $d_{50}$ approximately 0.7 $\mu$m equivalent spherical diameter.

**Kaolin E** - an ultrafine kaolin clay with a brightness of 66 (ISO R457) which was laboratory refined using sodium polyacrylate and had the following physical properties. Mass% of particles of size -2$\mu$m 95%, mass% of particles of size - 1$\mu$m 75%, $d_{50}$ approximately 0.6 $\mu$m equivalent spherical diameter.

**Kaolin F** - a fine kaolin clay with a brightness of 66 (ISO R457) which was laboratory refined without dispersant and had the following physical properties. Mass% of particles of size -2$\mu$m 84 %, mass% of particles of size -1 $\mu$m 67%, $d_{50}$ approximately 0.7 $\mu$m equivalent spherical diameter.

**Kaolin G** - a fine kaolin clay with a brightness of 80 (ISO R457) which was laboratory refined using sodium polyacrylate and had the following physical properties. Mass% of particles of size -2 $\mu$m 83%.

**Kaolin H** - an ultrafine kaolin clay with a brightness of 79 (ISO R457) which was refined on full production scale and had the following physical properties. Mass% of particles of size -2 $\mu$m 94%, mass% of particles of size -1 $\mu$m 74%, BET surface area of 16 m$^2$/g, $d_{50}$ approximately 0.6 $\mu$m equivalent spherical diameter.

**Kaolin I** - a kaolin of ultrafine particle size with a brightness of 87.5 $\pm$ 1.0 (ISO R457). This material has the following physical properties: Maximum mass% of particles of +300 mesh size 0.02%. Maximum mass% of particles of size +10$\mu$m 0.2%. Minimum mass% of particles of size -1 $\mu$m 77%. pH 5.5. BET surface area 16 m$^2$/g. $d_{50}$ approximately 0.4 $\mu$m equivalent spherical diameter.

Commercially available flocculants - 1,2-ethanediamine polymer with (chloromethyl)oxirane and N-methylmethanamine (referred to below as "1,2-ethanediamine polymer"), and alum (aluminium sulphate) - were used to treat the inorganic particulate clays where indicated. The 1,2-ethanediamine polymer was 100% active and available in liquid form.

Commercially available fount solution Journal Fount T, obtainable from FlintGroup UK, United Kingdom (www.flintgrp.com) and used as standard in the news print industry were used to determine percentage water uptake and turbidity (washout factor) as described below.

*Methods*

Where indicated, the inorganic particulate clays were treated with flocculant at the final stage of the clay refining process. The desired dose of flocculant was added to the aqueous clay slurry, which was at a clay concentration between 5 and 15 wt%, and mixed at a low speed for a few minutes until a homogenous and more viscous mix was obtained. The flocculated clay slurry was then filtered using a Buchner funnel and dried overnight at 80°C. The clay was then milled using a JK mill (small samples < 200g) or Raymond milled (samples > 1kg) before being tested.

Pigmented inks in a coldset varnish were prepared by mixing a mineral-varnish concentrate with a pigment-varnish concentrate.

The coldset varnish was prepared by mixing at 3:2 wt:wt ratio a coldset news-ink varnish which is a modified phenolic varnish with a hydrocarbon varnish, both supplied by FlintGroup UK, United Kingdom (www.flintgrp.com).

The particulate mineral additive was added into the varnish by either high shear mixing or bead milling.

For the high shear mixing method, the mineral was added at 40 wt% in the varnish by mixing at 3,000 rpm for 10 minutes in a DAC 150 Speedmixer, ensuring that the mineral additive was well dispersed.

For the bead milling method, the mineral was added at 40 wt% in the coldset varnish with added 10 wt% Nytex 810 mineral oil supplied by Nynas AB, Stockholm (www.nynas.com), using a Dispermat VMA-getzman GMBH-D-5158 with bead mill attachment. The mineral was initially mixed at 400 rpm until it was all incorporated into the varnish. Stainless steel beads of 2 mm diameter and 9 g/cm$^3$ density were added to the miner-varnish mix so that the volume of beads was 80% of the volume of the mineral-varnish mix. The speed was increased to 4,000 rpm and the mixing time was 30 minutes, keeping the temperature of the mix around 75°C by using a water cooling jacket and the torque at approximately 400w.m. The mineral-varnish mix was recovered after screening out the stainless steel beads.

A batch of 20 wt% magenta pigment concentrate was also prepared by either high speed mixing or bead milling following the same methods described above for the 40 wt% mineral concentrate. The magenta pigment was CI Pigment Red 57:1 also called Carmine 219-306S (mid-shade) supplied by SunChemical, S.A., Wavre, Belgium (www.sunchemical.com).

The pigmented inks were prepared by mixing the mineral-varnish concentrate containing 40 wt% mineral with the pigment-varnish concentrate containing 20 wt% magenta pigment in the right proportion (i.e. 37.5% of mineral-varnish concentrate with 62.5% of pigment-varnish concentrate mixed at 3,000 rpm for 2 minutes using a DAC 150 Speedmixer.

After mixing, the pigmented ink containing 15 wt% mineral and 12.5 wt% magenta pigment in coldset varnish was left to cool and rest for 24 hours before testing for interaction with fount solution (water uptake and washout).

The interaction of the ink with the fount solution was studied using Journal Fount T supplied by FlintGroup UK, United Kingdom (www.flintgrip.com), which was prepared at 2.5 wt% concentration in tap water before testing with inks.

Before testing for lithotronic behaviour, 10 g of the pigmented ink containing the particulate mineral additive and magenta pigment was mixed for 5 minutes at 3,000 rpm to decrease its viscosity and allow some water/fount uptake.

15 g of fount solution was added to 10 g of the pigmented ink and mixed at high shear (about 2,000 rpm) using a DAC 150 Speedmixer. On mixing, an ink-fount emulsion was formed and after 5 minutes, the water uptake was determined by pouring the excess fount solution. The method was repeated 3 times, and the final water uptake was measured by weighing the amount of fount solution being incorporated into the inks after the excess had been removed. The percentage water uptake was calculated as the amount of fount solution taken by 100 g of ink. The excess fount solution was examined for evidence of turbidity or washout and the amount of washout was measured as the absorbance at 460 nm using a Unicam UV/vis spectrometer UV4 described above. A higher absorbance value means a high amount of mineral washout from the ink into the fount solution.

A number of samples of treated and untreated clays were prepared using high shear mixing in pigmented coldset ink compositions and tested for % water uptake after 15 minutes and washout factor (absorbance of 460 nm light, which is related to turbidity) using Journal Fount T solution. The results are shown in Table 5.

Table 5.

| Sample | Kaolin | Flocculant | wt % Flocculant | % Water Uptake after 15 minutes | Washout Factor (Absorbance at 460 nm) |
|---|---|---|---|---|---|
| AA | Kaolin D | None | - | 47 | 2.0 |
| BB | Kaolin D | 1,2-ethanediamine polymer | 0.1 | 45 | 1.3 |
| CC | Kaolin D | 1,2-ethanediamine polymer | 0.2 | 44 | 0.80 |
| DD | Kaolin D | 1,2-ethanediamine polymer | 0.3 | 46 | 0.39 |
| EE | Kaolin D | 1,2-ethanediamine polymer | 0.4 | 46 | 0.24 |
| FF | Kaolin D | Aluminium sulphate | 0.1 | 53 | 1.3 |
| GG | Kaolin D | Aluminium sulphate | 0.5 | 47 | 0.74 |
| HH | Kaolin E | None | - | 43 | 1.3 |
| II | Kaolin E | 1,2-ethanediamine polymer | 0.2 | 46 | 0.39 |
| JJ | Kaolin F | None | - | 47 | 1.1 |
| KK | Kaolin F | 1,2-ethanediamine polymer | 0.2 | 47 | 0.14 |
| LL | Kaolin G | None | - | 42 | 1.1 |
| MM | Kaolin G | 1,2-ethanediamine polymer | 0.2 | 45 | 0.51 |
| NN | Kaolin G | 1,2-ethanediamine polymer | 0.3 | 45 | 0.27 |
| OO | Kaolin G | 1,2-ethanediamine polymer | 0.4 | 47 | 0.18 |

(continued)

| Sample | Kaolin | Flocculant | wt % Flocculant | % Water Uptake after 15 minutes | Washout Factor (Absorbance at 460 nm) |
|---|---|---|---|---|---|
| PP | Kaolin H | None | - | 43 | 1.9 |
| QQ | Kaolin H | 1,2-ethanediamine polymer | 0.3 | 48 | 0.20 |

A number of samples of treated and untreated clays were prepared in pigmented coldset ink compositions using the bead milling method and tested for % water uptake after 15 minutes and washout factor (absorbance of 460 nm light, which is related to turbidity) using Journal Fount T solution. The results are shown in Table 6.

**Table 6.**

| Sample | Kaolin | Flocculant | wt% Flocculant | % Water Uptake after 15 minutes | Washout Factor (Absorbance at 460 nm) |
|---|---|---|---|---|---|
| RR | Kaolin H | 1,2-ethanediamine polymer | 0.3 | 44 | 0.11 |
| SS | Kaolin D | Aluminium sulphate | 0.5 | 47 | 0.26 |
| TT | Kaolin D | 1,2-ethanediamine polymer | 0.3 | 48 | 0.33 |
| UU | Kaolin I | None | - | 48 | 3.2 |
| VV | Kaolin H | 1,2-ethanediamine polymer | 0.5 | 48 | 0.2 |

Inks made with these examples and bead milled magenta pigment were printed using a Prufbau instrument and showed normal printing performance (print gloss and density).

Treatment of different clays with different amounts of flocculants was shown to reduce the washout factor of ink samples containing these clays.

The foregoing broadly describes the present disclosure without limitation. Variations and modifications as will be readily apparent to those skilled in the art are intended to be within the scope of the present invention as defined in and by the appended claims.

**Claims**

1. An offset printing ink composition comprising a liquid carrier, an inorganic particulate additive and a flocculant, wherein the flocculant is present in the ink composition in an amount ranging from about 0.05 % to about 1.0 % by weight of the inorganic particulate additive.

2. The offset printing ink composition according to claim 1, wherein the flocculant is present in the ink composition in an amount ranging from about 0.1 % to about 0.5 % by weight of the inorganic particulate additive.

3. The offset printing ink composition according to claim 1 or 2, wherein the flocculant comprises a multivalent cation.

4. The offset printing ink composition according to any one of claims 1 to 3, wherein the flocculant comprises a polymer.

5. The offset printing ink composition according to claim 4, wherein the polymer is an ionene polymer.

6.  The offset printing ink composition according to any one of claims 1 to 5, wherein the flocculant is selected from aluminium sulphate and 1,2-ethanediamine polymer with (chloromethyl)oxirane and N-methylmethanamine.

7.  The offset printing ink composition according to any one of claims 1 to 6, wherein the inorganic particulate additive is provided with a hydrophobic coating.

8.  The offset printing ink composition according to claim 7, wherein the hydrophobic coating is covalently bonded to the inorganic particulate additive.

9.  The offset printing ink composition according to claim 7 or 8, wherein the hydrophobic coating comprises a silane, for example octyl silane or vinyl silane, or an amine, for example octadecylamine.

10. A method of manufacturing an offset printing ink composition according to any one of claims 1 to 9, comprising combining the liquid carrier, the inorganic particulate additive, and the flocculant.

11. Use of a flocculant in an ink composition according to claims 1 to 9 to reduce or eliminate bleeding of an inorganic particulate additive from the ink composition into a fount solution during offset printing.

12. An offset printing ink composition according to any one of claims 1 to 9, wherein the inorganic particulate additive is a clay.

13. The offset printing ink composition according to claim 12, wherein the clay is kaolin.

14. Use of an offset printing ink composition according to any one of claims 1 to 9 in offset printing.


**Patentansprüche**

1.  Offsetdruck-Druckfarbzusammensetzung, umfassend einen flüssigen Trägerstoff, ein anorganisches partikelförmiges Additiv und ein Flockungsmittel, wobei das Flockungsmittel in der Druckfarbenzusammensetzung in einer Menge in einem Bereich von etwa 0,05 bis etwa 1,0 Gewichtsprozent des anorganischen partikelförmigen Additivs vorhanden ist.

2.  Offsetdruck-Druckfarbzusammensetzung gemäß Anspruch 1, wobei das Flockungsmittel in der Druckfarbenzusammensetzung in einer Menge in einem Bereich von etwa 0,1 bis etwa 0,5 Gewichtsprozent des anorganischen partikelförmigen Additivs vorhanden ist.

3.  Offsetdruck-Druckfarbzusammensetzung gemäß Anspruch 1 oder 2, wobei das Flockungsmittel ein mehrwertiges Kation umfasst.

4.  Offsetdruck-Druckfarbzusammensetzung gemäß einem der Ansprüche 1 bis 3, wobei das Flockungsmittel ein Polymer umfasst.

5.  Offsetdruck-Druckfarbzusammensetzung gemäß Anspruch 4, wobei das Polymer ein Ionenpolymer ist.

6.  Offsetdruck-Druckfarbzusammensetzung gemäß einem der Ansprüche 1 bis 5, wobei das Flockungsmittel ausgewählt ist aus Aluminiumsulfat und 1,2-Ethandiaminpolymer mit (Chlormethyl)oxiran und N-Methylmethanamin.

7.  Offsetdruck-Druckfarbzusammensetzung gemäß einem der Ansprüche 1 bis 6, wobei das anorganische partikelförmige Additiv mit einer hydrophoben Beschichtung versehen ist.

8.  Offsetdruck-Druckfarbzusammensetzung gemäß Anspruch 7, wobei die hydrophobe Beschichtung zweiwertig an das anorganische partikelförmige Additiv gebunden ist.

9.  Offsetdruck-Druckfarbzusammensetzung gemäß Anspruch 7 oder 8, wobei die hydrophobe Beschichtung ein Silan, beispielsweise Octylsilan oder Vinylsilan, oder ein Amin, beispielsweise Octadecylamin, umfasst.

10. Verfahren zur Herstellung einer Offsetdruck-Druckfarbzusammensetzung gemäß einem der Ansprüche 1 bis 9, umfassend ein Kombinieren des flüssigen Trägerstoffs, des anorganischen partikelförmigen Additivs und des Flockungsmittels.

11. Verwendung eines Flockungsmittels in einer Druckfarbenzusammensetzung gemäß den Ansprüchen 1 bis 9 zum Reduzieren oder Eliminieren eines Ausblutens eines anorganischen partikelförmigen Additivs aus der Druckfarbenzusammensetzung in ein Feuchtmittel während eines Offsetdrucks.

12. Offsetdruck-Druckfarbzusammensetzung gemäß einem der Ansprüche 1 bis 9, wobei das anorganische partikelförmige Additiv ein Ton ist.

13. Offsetdruck-Druckfarbzusammensetzung gemäß Anspruch 12, wobei der Ton Kaolin ist.

14. Verwendung einer Offsetdruck-Druckfarbzusammensetzung gemäß einem der Ansprüche 1 bis 9 im Offsetdruck.


**Revendications**

1. Une composition d'encre pour impression offset comprenant un support liquide, un additif particulaire inorganique et un floculant, dans laquelle le floculant est présent dans la composition d'encre en une quantité allant d'environ 0,05 % à environ 1,0 % en poids de l'additif particulaire inorganique.

2. La composition d'encre pour impression offset selon la revendication 1, dans laquelle le floculant est présent dans la composition d'encre en une quantité allant d'environ 0,1 % à environ 0,5 % en poids de l'additif particulaire inorganique.

3. La composition d'encre pour impression offset selon la revendication 1 ou 2, dans laquelle le floculant comprend un cation multivalent.

4. La composition d'encre pour impression offset selon l'une quelconque des revendications 1 à 3, dans laquelle le floculant comprend un polymère.

5. La composition d'encre pour impression offset selon la revendication 4, dans laquelle le polymère est un polymère ionène.

6. La composition d'encre pour impression offset selon l'une quelconque des revendications 1 à 5, dans laquelle le floculant est choisi parmi le sulfate d'aluminium et le polymère de 1,2-éthanediamine avec le (chlorométhyl)oxirane et la N-méthylméthanamine.

7. La composition d'encre pour impression offset selon l'une quelconque des revendications 1 à 6, dans laquelle l'additif particulaire inorganique est prévu avec un revêtement hydrophobe.

8. La composition d'encre pour impression offset selon la revendication 7, dans laquelle le revêtement hydrophobe est lié de manière covalente à l'additif particulaire inorganique.

9. La composition d'encre pour impression offset selon la revendication 7 ou 8, dans laquelle le revêtement hydrophobe comprend un silane, par exemple un octylsilane ou un vinylsilane, ou une amine, par exemple une octadécylamine.

10. Un procédé de fabrication d'une composition d'encre pour impression offset selon l'une quelconque des revendications 1 à 9, comprenant la combinaison du support liquide, de l'additif particulaire inorganique, et du floculant.

11. Utilisation d'un floculant dans une composition d'encre selon les revendications 1 à 9 pour réduire ou éliminer le saignement d'un additif particulaire inorganique de la composition d'encre dans une solution de mouillage lors de l'impression offset.

12. Une composition d'encre pour impression offset selon l'une quelconque des revendications 1 à 9, dans laquelle l'additif particulaire inorganique est une argile.

13. La composition d'encre pour impression offset selon la revendication 12, dans laquelle l'argile est du kaolin.

**14.** Utilisation d'une composition d'encre pour impression offset selon l'une quelconque des revendications 1 à 9 en impression offset.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013181021 A
- JP 2012172023 A
- GB 960639 A
- US 2005098505 A
- EP 1314766 A
- EP 614948 A
- US 5576617 A
- US 2261002 A, Ritter
- US 2271378 A, Searle
- US 3489663 A, Bayer
- US 28807 A
- US 28808 A, Panzer
- US 4054542 A, Buckman
- US 4506081 A, Fenyes
- US 4581058 A, Fenyes
- US 4403867 A

**Non-patent literature cited in the description**

- *Micromeritics Instruments Corporation, www.micro-meritics.com*
- Journal Fount T and Journal Fount BC. FlintGroup UK
- *Lawter, www.lawter.com*
- Journal Fount T. FlintGroup UK
- **NYNAS AB.** *Stockholm, www.nynas.com*
- **SUNCHEMICAL, S.A.** *Wavre, www.sunchemi-cal.com*
- Journal Fount T supplied. FlintGroup UK